# EUROPÄISCHE PATENTSCHRIFT

(11) **EP 3 446 191 B1**
(45) Veröffentlichungstag und Bekanntmachung des Hinweises auf die Patenterteilung: **07.04.2021**
(21) Anmeldenummer: 17707204.8
(22) Anmeldetag: 16.02.2017
(51) Int. Cl.: G05D 11/00, F17D 3/12, C10L 10/00, B64D 37/30, B67D 7/04, B64F 1/28, G05D 11/13, G05D 21/02

(54) **KRAFTSTOFFADDITIVIERUNGSVORRICHTUNG, VERFAHREN ZUR ADDITIVIERUNG EINES KRAFTSTOFFS UND VERWENDUNG**
DEVICE FOR ADDING ADDITIVE TO FUEL , METHOD FOR ADDING ADDITIVE TO FUEL AND USE THEREOF
DISPOSITIF D'ADDITIVATION DE CARBURANT, PROCÉDÉ D'ADDITIVATION D'UN CARBURANT ET LEUR UTILISATION

(30) Priorität: 22.04.2016 DE 102016107522
(43) Veröffentlichungstag der Anmeldung: 27.02.2019
(73) Patentinhaber: FAUDI Aviation GmbH, 35260 Stadtallendorf (DE)
(72) Erfinder: ADEN, Matthias, 64668 Rimbach (DE); GUTMANN, Christian, 79695 Wieden (DE); PARSONS, Mark, 68723 Schwetzingen (DE)
(74) Vertreter: Patentanwälte Olbricht Buchhold Keulertz
(86) Internationale Anmeldenummer: PCT/EP2017/053565
(87) Internationale Veröffentlichungsnummer: WO 2017/182160

(56) Entgegenhaltungen:
- US-A1- 2009 187 416
- US-A1- 2015 260 349

## Beschreibung

Die Erfindung betrifft eine Kraftstoffadditivierungsvorrichtung gemäß Anspruch 1, ein Verfahren zur Additivierung eines Kraftstoffs nach Anspruch 7 und die Verwendung einer solchen Kraftstoffadditivierungsvorrichtung zur Durchführung des Verfahrens nach Anspruch 16.

Zur Betankung von Flugzeugen, ist es bekannt, Kraftstoff aus einem Tanklager zu entnehmen und den Kraftstoff schließlich mit einem Tankwagen in einen Kraftstofftank des Flugzeugs zu pumpen. Oftmals ist zwischen dem Tanklager und dem Tankwagen eine Pipeline oder ein Hydrantensystem vorgesehen, um die Fahrwege des Tankwagens gering zu halten. Problematisch ist, dass die Kraftstoffqualität der einzelnen Betankungen inkonstant ist. Der Kraftstoff kann sich teilweise entmischen oder er nimmt Stoffe aus der Umgebung auf. Das führt zu einer Betankung der Flugzeuge mit Kraftstoff, der beispielsweise mit Wasser oder Metall angereichert ist, zu wenig Frostschutzmittel (Icing-Inhibitoren) enthält, thermisch instabil ist oder dessen Schmierfähigkeit oder elektrische Leitfähigkeit vom Soll abweicht.

All diese Eigenschaften können grundsätzlich durch eine Zugabe von Additiven eingestellt werden. Die vorstehenden Probleme treten jedoch anschließend auf den Transportwegen, den Verladevorgängen und in Zwischenlagern auf, wodurch die Kraftstoffqualität zunehmend schlechter wird. Auch kann die Kraftstoffqualität bereits mit der Ankunft im Treibstoffdepot des Flughafens variieren.

Additive zur Verbesserung von bestimmten Eigenschaften von Kraftstoffen sind beispielsweise aus WO 07/099048 A1, WO 08/107371 A2 und WO 11/045334 A1 bekannt. Hier werden unter anderem Additive zur Stabilisierung von Kraftstoffen gegen Einwirkung von Licht, Sauerstoff und Wärme, zur Antistatikausrüstung und Verbesserung der elektrischen Leitfähigkeit sowie zur Bindung von Wasser in Kraftstoffen beschrieben. Die Additive werden mittels Labormethoden mit dem Kraftstoff vermengt.

US 2015/260349 A1 zeigt eine Betankungsanlage, bei der basierend auf einer Durchflussmessung von Kraftstoff Additiv in eine Förderleitung eingespeist wird, um ein konstantes Mischungsverhältnis zu gewährleisten.

US 2009/187 416 A1 offenbart eine Betankungsanlage, bei der Wärmetauscher, durch die Kraftstoff fließt, basierend auf einer gemessenen Kraftstoff- und Additivtemperatur gesteuert werden.

Aufgabe der Erfindung ist es, mit möglichst hoher Zuverlässigkeit Kraftstoff in hoher Qualität zur Betankung bereitstellen zu können. Menschliches Versagen soll möglichst ausgeschlossen werden und die Kosten für die Bereitstellung des Kraftstoffs sollen möglichst gering sein. Außerdem ist eine hohe Flexibilität wünschenswert, denn unterschiedliche Verbrennungsmaschinen, beispielsweise Turbinen, haben unterschiedliche Anforderung an den Kraftstoff.

Hauptmerkmale der Erfindung sind in den Ansprüchen 1, 7 und 16 angegeben. Ausgestaltungen sind Gegenstand der Ansprüche 2 bis 6 und 8 bis 15.

Die Erfindung betrifft eine Kraftstoffadditivierungsvorrichtung mit einem Kraftstoffbehälter und einer mit ihrem ersten Ende an den Kraftstoffbehälter angeschlossenen Förderleitung, über die Kraftstoff aus dem Kraftstoffbehälter zu einer Austrittsöffnung am zweiten Ende der Förderleitung leitbar ist. In oder an der Förderleitung ist eine erste Sensorik angeordnet, die eine Datenverbindung zu einer Dosiereinrichtung aufweist, wobei mit der ersten Sensorik und der Dosiereinrichtung eine Eigenschaft, zum Beispiel der Mengenanteil von wenigstens einem Inhaltsstoff, des durch die Förderleitung strömenden Kraftstoffs messbar ist bzw. gemessen wird. Die Dosiereinrichtung ist über eine Dosierschnittstelle zwischen der ersten Sensorik und der Austrittsöffnung mit der Förderleitung verbunden. Außerdem weist die Dosiereinrichtung wenigstens einen Additivbehälter auf und ist dazu ausgestaltet, aus dem oder den Additivbehältern in Abhängigkeit der gemessenen Eigenschaften eine berechnete Einspeisemenge Additiv über die Dosierschnittstelle in die Förderleitung zu leiten.

Vorteilhaft hieran ist die automatische Einstellung des Kraftstoffs durch Hinzufügung des Additivs. Es wird hierdurch an der Auslassöffnung kontinuierlich qualitativ hochwertiger Kraftstoff bereitgestellt, selbst wenn der Kraftstoff im Kraftstoffbehälter hinsichtlich der Eigenschaften variiert. Damit ist der Aufwand, den Kraftstoff in einer qualitativ hochwertigen Verfassung zu besorgen und diese zu konservieren geringer, was die Kosten für die Bereitstellung niedrig hält. Außerdem kann basierend auf dem Kraftstoff im Kraftstoffbehälter an der Austrittsöffnung Kraftstoff mit unterschiedlichen Spezifikationen bereitgestellt werden, indem unterschiedliche Zielvorgaben für die Eigenschaften gemacht werden. Diese Eigenschaften werden dann durch die Einleitung des Additivs individuell eingestellt, bspw. bei der Betankung unterschiedlicher Flugzeuge.

Erfindungsgemäß weist die Dosiereinrichtung wenigstens einen Additivbehälter auf. In einer optionalen näheren Ausgestaltung der Kraftstoffadditivierungsvorrichtung weist die Dosiereinrichtung wenigstens zwei, weiter bevorzugt wenigstens drei und besonders bevorzugt wenigstens vier Additivbehälter auf und ist dazu ausgestaltet, aus den Additivbehältern in Abhängigkeit der gemessenen Eigenschaften berechnete Einspeisemengen der Additive über die Dosierschnittstelle in die Förderleitung zu leiten. Bei Verwendung von mehreren Additivbehältern lassen sich gleich mehrere Eigenschaften des Kraftstoffs durch unterschiedliche Additive einstellen.

In einer beispielhaften Ausgestaltung kann vorgesehen sein, dass in der Förderleitung eine Fördereinrichtung, insbesondere eine Förderpumpe, angeordnet ist. Damit lässt sich die Durchflussmenge an Kraftstoff durch die Förderleistung gut einstellen. Alternativ kann jedoch auch ein hydrostatischer Druck oder eine Druckbeaufschlagung des Kraftstoffbehälters genutzt werden, um diesen zur Austrittsöffnung zu fördern.

Bei einer optionalen Ausführungsform mündet die Austrittsöffnung in einen Zielbehälter. Damit wird der additivierte Kraftstoff zunächst wieder gesammelt. Optional, wenn auch weniger bevorzugt, ist es jedoch auch möglich, dass die Austrittsöffnung in einen Brennraum mündet.

Gemäß einer speziellen Ausführung ist der Zielbehälter ein Tankwagen, Tank, Vorratstank, Zwischentank, eine Pipeline, ein Fahrzeugtank eines Kraftfahrzeugs oder Luftfahrzeugs, bevorzugt eines Flugzeugs oder Helikopters, besonders bevorzugt eines turbinengetriebenen Flugzeuges. In diesen Zielbehältern liegt schließlich Kraftstoff mit hoher Qualität vor.

Besonders geeignet ist die Kraftstoffadditivierungsvorrichtung, wenn der Kraftstoffbehälter ein Kraftstoffdepot, ein Zwischentanklager, eine Pipeline oder einen Tankwagen jeweils eines Flughafens ist. Gerade Luftfahrzeuge haben nämlich hohe Anforderungen an die Kraftstoffqualität. In einer besonders bevorzugten Ausführungsform ist der Kraftstoffbehälter ein Tankwagen und der Zielbehälter ein Flugzeugtank. Vorzugsweise sind außerdem der oder die Additivbehälter auf dem Tankwagen angeordnet.

Weiterhin kann in einer speziellen Ausführungsform beispielsweise vorgesehen sein, dass der oder die Additivbehälter aus der Gruppe Tankwagen, Intermediate Bulk Container, Fass oder Tank ist. Die hohen notwendigen Kraftstoffmengen für Flugzeuge können somit ohne Unterbrechung hinreichend mit Additiv vermischt werdenBeispielsweise handelt es sich bei den Additivbehältern um Fässer. Insbesondere können diese Fässer mit einem Siegel und einem speziellen Kupplungssystem und/oder einer Entnahmevorrichtung versehen sein, die im Wesentlichen eine Entnahme des Inhalts der Fässer ermöglicht, ohne dass die im Fass enthaltene Gasphase in die Umwelt entweicht und beispielsweise den Operateur gefährdet und/oder ohne dass Umgebungsluft in das Fass eindringt und den Fassinhalt kontaminiert. Derartige Kupplungsysteme, Schnellkupplungen und/oder Entnahmevorrichtungen sind unter den englischen Namen "dry-break couplings" bzw. "diptools" kommerziell verfügbar. Derartige Verbindungen erfüllen bevorzugt den British Standard BS 6356 Part 9 (1996).

Gemäß einer Variante ist vorgesehen, dass der oder die Additivbehälter jeweils über individuelle Koppelmittel mit der Dosierschnittstelle verbunden sind. Solche individuellen Koppelmittel, beispielsweise spezielle Flansche oder Kupplungen, verhindern ein Vertauschen von Additivbehältern mit unterschiedlichen Additiven oder deren Anschluss an nicht dafür vorgesehene Leitungen.

Optional und bevorzugt kann die Kraftstoffadditivierungsvorrichtung dahingehend ergänzt sein, dass der oder die Additivbehälter und/oder der Kraftstoffbehälter jeweils einen Informationsträger aufweist, dessen Informationen über einen Detektor an die Dosiereinrichtung übermittelbar sind bzw. übermittelt werden. Ein solcher Informationsträger des Kraftstoffbehälters kann Informationen über den Kraftstofftyp und physikalische Kenndaten betreffend die Zieleigenschaft sowie optional eine Chargennummer des im Kraftstoffbehälter enthaltenen Kraftstoffs umfassen. Der Informationsträger des Additivbehälters kann Informationen über den Additivtyp und optional eine Chargennummer des im Additivbehälter enthaltenen Additivs umfassen.

Insbesondere ist mit der Dosiereinrichtung eine Entnahme des Inhalts aus den Additivbehältern unterbindbar bzw. wird unterbunden, beispielsweise durch Schließen eines Entnahmeventils oder Stoppen von Dosierfördereinrichtungen, wenn die ausgelesenen Informationen nicht zu den in der Dosiereinrichtung hinterlegten Daten passen.

Der Informationsträger kann unter anderem aus der Gruppe bestehend aus eindimensionalen Barcodes, zweidimensionalen Barcodes und RFID- (radio-frequency identification) Transpondern sein.

Nach einer beispielhaften Ausführungsform ist der Kraftstoff ein flüssiger Turbinenkraftstoff (Jet Fuel). Vorteilhaft an der erfindungsgemäßen Kraftstoffadditivierungsvorrichtung ist, dass die hohen qualitativen Anforderungen an den Turbinenkraftstoff dauerhaft sichergestellt werden können. Dabei kann es sich beispielsweise um einen in der zivilen oder militärischen Luftfahrt üblichen Turbinenkraftstoff handeln, insbesondere auf Kerosinbasis. Dazu zählen beispielsweise Kraftstoffe der Bezeichnung Jet Fuel A, Jet Fuel A-1, Jet Fuel B, Jet Fuel JP-4, JP-5, JP-7, JP-8 und JP-8+100. Jet A und Jet A-1 sind kommerziell erhältliche Turbinenkraftstoffspezifikationen auf Kerosinbasis. Die zugehörigen Normen sind ASTM D 1655 sowie DEF STAN 91-91. Jet B ist ein weiter geschnittener Kraftstoff auf Basis von Naphtha- und Kerosinfraktionen. JP-4 ist äquivalent zu Jet B. JP-5, JP-7, JP-8 und JP-8+100 sind militärische Turbinenkraftstoffe, wie sie beispielsweise von der Marine und Luftwaffe eingesetzt werden. Zum Teil bezeichnen diese Normen Formulierungen, die bereits weitere Additive, wie Korrosionsinhibitoren, Vereisungsinhibitoren, statische Dissipatoren, etc. enthalten.

Gemäß einer beispielhaften Variante der Erfindung enthält der oder einer der Additivbehälter ein Additiv zur Anpassung der Antistatik-Eigenschaften des Kraftstoffs und mit der ersten Sensorik ist die elektrische Leitfähigkeit des Kraftstoffs bestimmbar bzw. wird bestimmt. Damit lassen sich also die Antistatik-Eigenschaften auf einen Zielwert einstellen. Hierzu wird insbesondere basierend auf der elektrischen Leitfähigkeit des Kraftstoffs die Einspeisemenge des Additivs zur Anpassung der Antistatik-Eigenschaften des Kraftstoffs berechnet.

In einer beispielhaften alternativen oder ergänzenden Variante kann vorgesehen sein, dass der oder einer der Additivbehälter ein Additiv zur Bindung von Wasser im Kraftstoff enthält und mit der ersten Sensorik der Gehalt an freiem Wasser im Kraftstoff bestimmbar ist bzw. bestimmt wird. Basierend auf dem Gehalt an freiem Wasser im Kraftstoff kann dann die Einspeisemenge des Additivs zur Bindung von Wasser im Kraftstoff berechnet werden. Verfahren und Messvorrichtungen zur Bestimmung des Gehalts an freiem Wasser in Kraftstoff sind beispielsweise aus DE 10 2008 056 559 A1 bekannt.

In einer weiteren alternativen oder ergänzenden Beispielvariante kann man vorsehen, dass der oder einer der Additivbehälter ein Additiv zur Verbesserung der thermischen Stabilität des Kraftstoffs enthält und mit der ersten Sensorik die thermische Stabilität des Kraftstoffs bestimmbar ist bzw. bestimmt wird. Basierend auf der thermischen Stabilität des Kraftstoffs wird dann die Einspeisemenge des Additivs zur Verbesserung der thermischen Stabilität des Kraftstoffs berechnet.

Gemäß einer beispielhaften weiteren alternativen oder ergänzenden Variante enthält der oder einer der Additivbehälter ein Additiv zur Desaktivierung enthaltener Metalle, vorzugsweise durch Komplexierung oder Chelatisierung (Metalldeaktivatoren), und mit der ersten Sensorik ist der Metallgehalt des Kraftstoffs bestimmbar bzw. wird bestimmt. Damit lässt sich basierend auf dem Metallgehalt des Kraftstoffs die Einspeisemenge des Additivs zur Desaktivierung von enthaltenen Metallen berechnen.

Nach einer beispielhaften weiteren alternativen oder ergänzenden Variante enthält der oder einer der Additivbehälter als Additiv mindestens ein Additiv zur Erhöhung der Schmierfähigkeit und mit der ersten Sensorik ist die Schmierfähigkeit des Kraftstoffs bestimmbar bzw. wird bestimmt. Basierend auf der Schmierfähigkeit des Kraftstoffs lässt sich dann die Einspeisemenge des Additivs zur Verbesserung der Schmierfähigkeit berechnen.

Ferner ist bei einer beispielhaften weiteren alternativen oder ergänzenden Variante vorgesehen, dass der oder einer der Additivbehälter als Additiv Icing Inhibitoren enthält und mit der ersten Sensorik der Gehalt an Icing Inhibitoren im Kraftstoff bestimmbar ist bzw. bestimmt wird. Somit lässt sich basierend auf dem Gehalt an Icing Inhibitoren im Kraftstoff die Einspeisemenge an Icing Inhibitoren berechnen.

Weiterhin kommen insbesondere Additive aus der folgenden Gruppe in Betracht:
- Additive zur Verbesserung der Leitfähigkeit, Additive zur Verbesserung der thermischen Stabilität, Additive zur Bindung von Wasser in Kraftstoffen, Metalldesaktivatoren, Additive zur Verbesserung der Schmierfähigkeit, Additive zur Absenkung des Gefrierpunktes von im Kraftstoff enthaltenem Wasser (Icing Inhibitoren), Detergenzien, Korrosionsinhibitoren, Antioxidantien, sterisch gehinderte tert.-Butylphenole, N-Butylphenylendiamine, N,N'-Diphenylamin und Derivate hiervon, Metalldesaktivatoren, N,N'-Disalicyliden-1,2-diaminopropan, Lösungsvermittler, Antistatika, Stadis® 450 oder wie beschrieben in WO 08/107371 A2, dort besonders von Seite 2, Zeile 11 bis Seite 10, Zeile 42 und den Beispielen, Biocide, Anti-Icing-Mittel (Icing Inhibitoren), Diethylenglykolmonomethylether, sowie Mischungen der vorstehenden Additive;
- von Bernsteinsäureanhydrid abgeleitete Verbindungen mit langkettigen Kohlenwasserstoffresten mit in der Regel 15 bis 700, vor allem 30 bis 200 Kohlenstoffatomen,
- von Bernsteinsäureanhydrid abgeleitete Verbindungen mit langkettigen Kohlenwasserstoffresten mit in der Regel 15 bis 700, vor allem 30 bis 200 Kohlenstoffatomen, mit weitere funktionelle Gruppen, die ausgewählt sind aus Hydroxygruppen, Aminogruppen, Amidogruppen und/oder Imidogruppen.
- Derivate von Polyalkenylbernsteinsäureanhydrid,
- Derivate von Polyalkenylbernsteinsäureanhydrid, welche durch Umsetzung von Polyalkenen mit Maleinsäureanhydrid auf thermischem Weg oder über die chlorierten Kohlenwasserstoffe erhalten sind. Das zahlenmittlere Molekulargewicht der langkettigen Kohlenwasserstoffreste liegt vorzugsweise in einem Bereich von etwa 200 bis 10.000, besonders bevorzugt 400 bis 5000, insbesondere 600 bis 3000 und speziell 650 bis 2000. Vorzugsweise leiten sich diese langkettigen Kohlenwasserstoffreste von konventionellen und insbesondere von den zuvor genannten reaktiven Polyisobutenen ab.
- Polyalkenylbernsteinsäureanhydriden mit Ammoniak, Monoaminen, Polyaminen, Monoalkoholen und Polyolen, Ethylendiamin, Diethylentriamin, Triethylentetramin, Tetraethylenpentamin, Propylendiamin, einwertige Alkohole, Ethanol, Allylalkohol, Dodecanol, Benzylalkohol, mehrwertige Alkohole, Ethylenglykol, Diethylenglykol, Propylenglykol, 1,2-Butandiol, Neopentylglykol, Glycerin, Trimethylolpropan, Erythrit, Pentaerythrit, Mannitol und Sorbitol,
- Polyalkenylthiophosphonatester, Polyalkenylreste, Polyalkenylreste, die sich von konventionellen oder reaktiven Polyisobutenen ableiten, Der Polyalkenylrest diese Ester weist vorzugsweise ein zahlenmittleres Molekulargewicht im Bereich von etwa 300 bis 5000, besonders bevorzugt 400 bis 2000 und insbesondere 500 bis 1500 auf. Der Polyalkenylrest leitet sich vorzugsweise von Polyolefinen ab. Dabei handelt es sich speziell um Polyalkenylreste, die sich von konventionellen oder reaktiven Polyisobutenen ableiten. Geeignete Verfahren zur Herstellung geeigneter Polyalkenylthiophosphonatester durch Umsetzung eines Polyolefins mit einem Thiophosphorylierungsmittel sind z. B. in der US 5 725 611 beschrieben, worauf hier Bezug genommen wird.
- Mannich-Addukte, Mannich-Addukte, die durch Mannich-Umsetzung von aromatischen Hydroxylverbindungen, insbesondere Phenol und Phenolderivaten, mit Aldehyden und Mono- oder Polyaminen erhalten sind,
- Kerosin, Naphtha, Brightstock,.aromatische und aliphatische Kohlenwasserstoffe, Solvent Naphtha schwer, Solvesso®, Shellsol®, sowie Gemische dieser Lösungs- und Verdünnungsmittel.

Als Additive geeignete Zusatzstoffe für Turbinenkraftstoffzusammensetzung sind weiterhin geeignet Detergenzien, Korrosionsinhibitoren, weitere Antioxidantien wie sterisch gehinderte tert.-Butylphenole, N-Butyl-phenylendiamine oder N,N'-Diphenylamin und Derivate hiervon, Metalldesaktivatoren wie N,N'-Disalicyliden-1,2-diaminopropan, Lösungsvermittler, Antistatika wie Stadis®450 der Firma Innospec Limited, UK, oder wie beschrieben in WO 08/107371 A2, dort besonders von Seite 2, Zeile 11 bis Seite 10, Zeile 42 und den Beispielen, Biocide, Anti-Icing-Mittel (Icing Inhibitoren) wie bevorzugt Diethylenglykolmonomethylether, sowie Mischungen der genannten Zusatzstoffe.

Beispielsweise können mit Hilfe der erfindungsgemäßen Vorrichtung dem Kraftstoff Additive zudosiert werden, ausgewählt aus der Gruppe bestehend aus
- Additiven zur Verbesserung der Leitfähigkeit,
- Additive zur Verbesserung der thermischen Stabilität,
- Additive zur Bindung von Wasser in Kraftstoffen,
- Metalldesaktivatoren,
- Additive zur Verbesserung der Schmierfähigkeit sowie
- Additive zur Absenkung des Gefrierpunktes von im Kraftstoff enthaltenem Wasser (Icing Inhibitoren), vorzugsweise auf Basis von Ethylenglycolmonomethylether oder Diethylenglycolmonomethylether.

Additive zur Verbesserung der Leitfähigkeit sind solche, die die Leitfähigkeit des Kraftstoffes auf einen spezifizierten Wert erhöhen. Ein solcher Wert ist z.B. nach Def Stan 91-91 und JFSCL ein Wert von 50 bis 600 pS/m, und gemäß JP-8 von 150 bis 450 pS/m.
Ein bevorzugtes derartiges Additiv ist Stadis® 450 der Firma Innospec Limited, UK, sowie solche wie beschrieben in WO 08/107371, dort besonders von Seite 2, Zeile 11 bis Seite 10, Zeile 42 und den Beispielen.

Additive zur Verbesserung der thermischen Stabilität sind bevorzugt Spec-Aid 8Q462, AeroShell® Performance Additive 101, Turboline FS100C, Turboline FS100 und JFA-5.

Additive zur Bindung von Wasser in Kraftstoffen sind bevorzugt solche, wie beschrieben in WO 98/50139 A1, WO 00/53699 A1, WO 07/083106 A2, WO 11/045334 A1 oder WO 11/095825 A1.

Metalldesaktivatoren dienen zur Chelatisierung von Metallionen, die im Kraftstoff Oxidationsreaktionen katalysieren, was unter anderem zu einer niedrigen thermischen Stabilität, zum Beispiel gemessen nach dem JFTOT-Test, führen kann. Bevorzugt wirken solche Metalldesaktivatoren gegen Kupfer- und Zinkionen. Besonders bevorzugt sind N,N'-Disalicyliden-1,2-cyclohexanediamin und N,N'-Disalicyliden-1,2-propanediamin.

Additive zur Verbesserung der Schmierfähigkeit wirken oftmals auch als Korrosionsinhibitoren, die dem Kraftstoff zugesetzt werden um bewegliche Teile zu schmieren. Bevorzugt werden für diese Zwecke folgende Verbindungen eingesetzt: Apollo PRI-19 der Appollo Technologies Intl. Corp. (bevorzugt in Mengen von 18 bis 23 mg/l), Hitec 580 der Ethyl Petroleum Additives Ltd. (bevorzugt in Mengen von 15 bis 23 mg/l), Innospec DCI-4A oder DCI-6A der Innospec (bevorzugt in Mengen von 9 bis 23 mg/l bzw. 9 mg/l), Nalco 5403 der Nalco Chemical Co. (bevorzugt in Mengen von 12 bis 23 mg/l), Tolad 4410 und Tolad 351 der Baker Petrolite (bevorzugt in Mengen von 9 bis 23 mg/l) sowie UNICOR-J der Dorf Ketal Chemicals India Pvt Ltd. (bevorzugt in Mengen von 9 bis 23 mg/l).

Additive zur Absenkung des Gefrierpunktes von im Kraftstoff enthaltenem Wasser (Icing Inhibitoren), vorzugsweise auf Basis von Ethylenglycolmonomethylether, optional zusammen mit Methanol, oder Diethylenglycolmonomethylether.

In einer bevorzugten Ausführungsform handelt es sich bei den Additiven um solche Additive, wie sie beschrieben sind in WO 07/099048 A1, WO 08/107371 A2 oder WO 11/045334 A1, auf die hiermit ausdrücklich Bezug genommen sei.

Weitere Beispiele für als Additiv einsetzbare Zusatzstoffe sind die nachfolgend aufgeführten speziellen Verbindungsklassen (A), (B) und (C):
Bevorzugte Zusatzstoffe (A) sind von Bernsteinsäureanhydrid abgeleitete Verbindungen mit langkettigen Kohlenwasserstoffresten mit in der Regel 15 bis 700, vor allem 30 bis 200 Kohlenstoffatomen. Diese Verbindungen können weitere funktionelle Gruppen aufweisen, die vorzugsweise ausgewählt sind unter Hydroxy-, Amino-, Amido- und/oder Imidogruppen.
Bevorzugte Zusatzstoffe sind die entsprechenden Derivate von Polyalkenylbernsteinsäureanhydrid, welche z. B. durch Umsetzung von Polyalkenen mit Maleinsäureanhydrid auf thermischem Weg oder über die chlorierten Kohlenwasserstoffe erhältlich sind. Das zahlenmittlere Molekulargewicht der langkettigen Kohlenwasserstoffreste liegt vorzugsweise in einem Bereich von etwa 200 bis 10.000, besonders bevorzugt 400 bis 5000, insbesondere 600 bis 3000 und speziell 650 bis 2000. Vorzugsweise leiten sich diese langkettigen Kohlenwasserstoffreste von konventionellen und insbesondere von den zuvor genannten reaktiven Polyisobutenen ab. Von besonderem Interesse als Zusatzstoffe (A) sind die Derivate von Polyalkenylbernsteinsäureanhydriden mit Ammoniak, Monoaminen, Polyaminen, Monoalkoholen und Polyolen. Zur Derivatisierung bevorzugte Polyamine umfassen Ethylendiamin, Diethylentriamin, Triethylentetramin, Tetraethylenpentamin, Propylendiamin, etc. Geeignete Alkohole umfassen einwertige Alkohole, wie Ethanol, Allylalkohol, Dodecanol und Benzylalkohol, mehrwertige Alkohole, wie Ethylenglykol, Diethylenglykol, Propylenglykol, 1,2-Butandiol, Neopentylglykol, Glycerin, Trimethylolpropan, Erythrit, Pentaerythrit, Mannitol und Sorbitol.

Als Zusatzstoffe geeignete Bernsteinsäureanhydrid-Derivate (A) sind beispielsweise in der US 3 522 179, US 4 234 435, US 4 849 572, US 4 904 401, US 5 569 644 und US 6 165 235 beschrieben, worauf hier in vollem Umfang Bezug genommen wird.

Bevorzugte Zusatzstoffe (B) sind Polyalkenylthiophosphonatester. Der Polyalkenylrest dieser Ester weist vorzugsweise ein zahlenmittleres Molekulargewicht im Bereich von etwa 300 bis 5000, besonders bevorzugt 400 bis 2000 und insbesondere 500 bis 1500 auf. Der Polyalkenylrest leitet sich vorzugsweise von Polyolefinen ab, wie sie zuvor bei den Zusatzstoffen (A) als langkettiger Kohlenwasserstoffrest beschrieben wurden. Dabei handelt es sich speziell um Polyalkenylreste, die sich von konventionellen oder reaktiven Polyisobutenen ableiten. Geeignete Verfahren zur Herstellung geeigneter Polyalkenylthiophosphonatester durch Umsetzung eines Polyolefins mit einem Thiophosphorylierungsmittel sind z. B. in der US 5 725 611 beschrieben, worauf hier Bezug genommen wird.

Bevorzugte Zusatzstoffe (C) sind Mannich-Addukte. Derartige Addukte werden prinzipiell durch Mannich-Umsetzung von aromatischen Hydroxylverbindungen, insbesondere Phenol und Phenolderivaten, mit Aldehyden und Mono- oder Polyaminen erhalten. Vorzugsweise handelt es sich um die Umsetzungsprodukte von Polyisobuten-substituierten Phenolen mit Formaldehyd und Mono- oder Polyaminen wie Ethylendiamin, Diethylentriamin, Triethylentetramin, Tetraethylenpentamin, Dimethylaminopropylamin, etc. Geeignete Mannich-Addukte und Verfahren zu ihrer Herstellung sind z. B. in der US 5 876 468, EP 0831 141 A1, EP 1 233 990 A1 und EP 1 226 188 A1 beschrieben, worauf hier in vollem Umfang Bezug genommen wird.

Turbinenkraftstoff enthält die beschriebenen Additive in einer Menge von üblicherweise 0,0001 bis 1 Gew.-%, vorzugsweise 0,001 bis 0,5 Gew.-%, insbesondere 0,01 bis 0,2 Gew.-% und vor allem 0,01 bis 0,1 Gew.-%, bezogen auf die Gesamtmenge des Turbinenkraftstoffs.

Die Zusatzstoffe (A) bis (C) sowie gegebenenfalls weitere der zuvor genannten Zusatzstoffe können üblicherweise jeweils in Mengen von jeweils 0,0001 bis 1 Gew.-%, vorzugsweise 0,001 bis 0,6 Gew.-% und insbesondere 0,0015 bis 0,4 Gew.-%, bezogen auf die Gesamtmenge der Turbinenkraftstoffzusammensetzung, eingesetzt werden.

Beispielsweise enthält die Turbinenkraftstoffzusammensetzung, einen oder mehrere Zusatzstoffe aus der Gruppe (A), (B) und (C), insbesondere auch Mischungen hieraus wie (A) + (B), (A) + (C), (B) + (C) und (A) + (B) + (C).

Als Additiv geeignete Verdünnungsmittel sind beispielsweise bei der Erdölverarbeitung anfallende Fraktionen wie Kerosin, Naphtha oder Brightstock. Geeignet sind darüber hinaus aromatische und aliphatische Kohlenwasserstoffe wie Solvent Naphtha schwer, Solvesso® oder Shellsol® sowie Gemische dieser Lösungs- und Verdünnungsmittel.

Mit einer speziellen Ausführungsform der Kraftstoffadditivierungsvorrichtung ist zwischen der Dosiereinrichtung und der Austrittsöffnung eine zweite Sensorik in oder an der Förderleitung angeordnet, die eine Datenverbindung zu der Dosiereinrichtung aufweist, wobei mit der zweiten Sensorik und der Dosiereinrichtung eine Eigenschaft des durch die Förderleitung strömenden Kraftstoffs messbar ist bzw. gemessen wird, die auch mit der ersten Sensorik messbar ist bzw. gemessen wird. Damit ist eine Qualitätskontrolle des Kraftstoffs nach der Additivierung möglich. Optional kann die Einspeisemenge des Additivs außerdem angepasst werden.

Ferner sieht eine Ausgestaltungsvariante vor, dass zwischen der Dosiereinrichtung und der Austrittsöffnung eine Mischeinrichtung in der Förderleitung angeordnet ist, insbesondere zwischen der Dosiereinrichtung und der zweiten Sensorik. Damit wird ein homogenes Kraftstoffgemisch erhalten. Bei einer Positionierung vor der zweiten Sensorik werden außerdem korrekte Messergebnisse sichergestellt. Als Mischeinrichtung geeignet ist beispielsweise ein Labyrinth aus Strömungskörpern. Hiermit lässt sich der Kraftstoffstrom verwirbeln.

Zu einer exakten Dosierung trägt eine optionale Ergänzung derart bei, dass zwischen dem Kraftstoffbehälter und der Dosiereinrichtung ein Durchflussmengensensor angeordnet ist, der eine Datenverbindung zu der Dosiereinrichtung aufweist, wobei mit dem Durchflussmengensensor und der Dosiereinrichtung die Durchflussmenge von Kraftstoff durch die Förderleitung bestimmbar ist bzw. bestimmt wird, und wobei die Dosiereinrichtung dazu ausgestaltet ist, die über die Dosierschnittstelle in die Förderleitung geleitete berechnete Einspeisemenge des oder der Additive in Abhängigkeit von der bestimmten Durchflussmenge von Kraftstoff zu berechnen. Damit lassen sich Abweichungen in der Durchflussgeschwindigkeit, zum Beispiel durch den hydrostatischen Druck, in die Berechnung der Einspeisemenge einbeziehen. Das ist genauer als den Volumenstrom basierend auf anderen Faktoren, wie Pumpendrehzahl oder Füllstand im Kraftstoffbehälter, zu schätzen.

Des Weiteren ist in einer beispielhaften speziellen Ausführungsform vorgesehen, dass zwischen wenigstens einem Additivbehälter und der Dosierschnittstelle eine Dosierfördereinrichtung, insbesondere eine Dosierpumpe, angeordnet ist. Mithin lässt sich das Additiv einfach in gesteuerter Menge einleiten. Alternativ kann jedoch auch ein hydrostatischer Druck oder eine Druckbeaufschlagung des Additivbehälters genutzt werden, um das Additiv zur Austrittsöffnung zu fördern.

Eine exakte Dosierung gelingt auch bei einer beispielhaften Ergänzung derart, dass zwischen wenigstens einem Additivbehälter und der Dosierschnittstelle ein Dosiermengensensor angeordnet ist, der eine Datenverbindung zu der Dosiereinrichtung aufweist, wobei mit dem Dosiermengensensor und der Dosiereinrichtung die tatsächliche Einspeisemenge von Additiv bestimmbar ist bzw. bestimmt wird, und wobei die Dosiereinrichtung dazu ausgestaltet ist, die Einspeisemenge von Additiv basierend auf der bestimmten Einspeisemenge zu regeln.

Gemäß einer beispielhaften speziellen Ausgestaltung weist die Dosierschnittstelle ein Mehrwegeventil in der Förderleitung auf. Damit lassen sich die Durchflussmengen des Kraftstoffs und der Additive regulieren oder sperren.

Ferner können optional mit einer Informationsverarbeitungseinheit der Dosiereinrichtung Daten aus der Gruppe der folgenden Informationen und Messdaten protokolliert werden: Informationen der Informationsträger, Durchflussmenge von Kraftstoff durch die Förderleitung, Einspeisemenge des oder der Additive, Eigenschaft des durch die Förderleitung strömenden Kraftstoffs vor der Dosierschnittstelle, Eigenschaft des durch die Förderleitung strömenden Kraftstoffs hinter der Dosierschnittstelle, Ort, Datum, Dauer des Einleitens eines Additivs, Umgebungstemperatur, Kraftstofftemperatur, Operateur, Auftragnehmer, Förderdruck der Fördereinrichtung und Förderdruck der Dosierfördereinrichtungen. Damit ist ein gutes Qualitätsmanagement möglich.

Bei einer beispielhaften Ausführungsform dienen die protokollierten Informationen und Messdaten als Eingangsparameter für Berechnungen aus der Gruppe Lagerhaltung und/oder Bestandsüberwachung des Kraftstoffs, Lagerhaltung und/oder Bestandsüberwachung der Additive, Abrechnungserstellung für Kunden und Logistik der Versorgung mit Additiven. Hierzu kann die Dosiereinrichtung der Kraftstoffadditivierungsvorrichtung lokal aufgesplittete Recheneinheiten aufweisen, und mit anderen zentralen Datenbanken zusammenwirken. In einer bevorzugten Ausführungsform kann mit Hilfe der Informationsverarbeitungseinheit die Versorgung mit Additiv gesteuert werden. Beispielhaft wird dazu aus einem Vorratsbehälter Additiv in einen transportablen Behälter, z.B. ein Fass, IBC-Container oder einen Tankwagen abgefüllt, der seinerseits zum Befüllen des Additivbehälters dient oder in einer bevorzugten Ausführungsform mit dem Additivbehälter identisch sein kann. Je nach den von der Informationsverarbeitungseinheit verfügbaren Daten zur entnommenen Menge aus dem Additivbehälter steuert die Informationsverarbeitungseinheit die nachzuliefernde Menge an Additiv und die Logistik zur Beibringung.

Nach einer beispielhaften Ausgestaltungsvariante ist die Dosiereinrichtung dazu ausgestaltet, den Durchfluss des Kraftstoffs in der Förderleitung zu regeln, insbesondere wenn Additiv nicht oder nicht schnell genug in die Förderleitung leitbar ist. Hierdurch kann der Kraftstofffluss gestoppt werden wenn das notwendige Additiv zur Neige geht. Außerdem kann der Kraftstofffluss verlangsamt werden, damit das notwendige Additiv schnell genug in die Förderleistung eingeleitet werden kann.

Zum Beispiel ist die Dosiereinrichtung dazu ausgestaltet, den Durchfluss des Kraftstoffs in der Förderleitung und den Durchfluss des über die Einspeisestelle eingespeisten Additivs in einem geschlossenen Intervall zwischen minimalen und maximalen Durchflüssen zueinander zu regeln.

Ferner können von der Informationsverarbeitungseinheit weitergehende Informationen zum Vermischungsvorgang und/oder Warnungen an den Operateur dokumentiert werden, beispielsweise manuell vorgenommene Abweichungen der Steuervorgänge, sowie Messgrößen der Sensoriken, die andere Zieleigenschaften betreffen, als die, die zur Einstellung der Dosierfördereinrichtungen erforderlich sind, beispielsweise Partikelgehalt des Kraftstoffes.

Die Erfindung betrifft außerdem ein Verfahren zur Additivierung eines Kraftstoffs bei dem ein Kraftstoffs von einem Kraftstoffbehälter über eine mit einem ersten Ende angeschlossene Förderleitung zu einer Austrittsöffnung an einem zweiten Ende der Förderleitung geleitet wird. Dabei wird wenigstens eine Eigenschaft des durch die Förderleitung strömenden Kraftstoffs an einer ersten Messstelle gemessen. In Abhängigkeit der gemessenen Eigenschaften wird eine berechnete Einspeisemenge Additiv berechnet. Die berechnete Einspeisemenge Additiv wird über eine Einspeisestelle zwischen der ersten Messstelle und der Austrittsöffnung in die Förderleitung geleitet. Dies geschieht vorzugsweise kontinuierlich. Hierzu werden die Volumenströme des Additivs und des Kraftstoffs aufeinander abgestimmt. Damit wird an der Austrittsöffnung qualitativ hochwertiger Kraftstoff erhalten.

In einer speziellen beispielhaften Ausführungsvariante des Verfahrens werden wenigstens zwei Eigenschaften des durch die Förderleitung strömenden Kraftstoffs an der ersten Messstelle gemessen. In Abhängigkeit der gemessenen Eigenschaften werden die Einspeisemengen von wenigstens zwei Additiven berechnet und zwischen der ersten Messstelle und der Austrittsöffnung in die Förderleitung geleitet. Damit lassen sich wenigstens zwei Eigenschaften des Kraftstoffs korrekt einstellen.

Optional wird der Kraftstoff aus der Austrittsöffnung in einen Brennraum geleitet und hier verbrannt. Insbesondere wird der Kraftstoff jedoch aus der Austrittsöffnung in einen Zielbehälter geleitet. Damit lässt sich das Verfahren zentral durchführen, zum Beispiel auf einem Flughafen. Vorzugsweise ist der Zielbehälter ein Tankwagen, Tank, Vorratstank, Zwischentank, eine Pipeline, ein Fahrzeugtank eines Kraftfahrzeugs oder Luftfahrzeugs, insbesondere eines Flugzeugs oder Helikopters.

Bei dem Kraftstoffbehälter handelt es sich vorzugsweise um ein Kraftstoffdepot, ein Zwischentanklager, eine Pipeline oder einen Tankwagen jeweils eines Flughafens. Insbesondere ist der Kraftstoffbehälter ein Tankwagen und der Zielbehälter ein Flugzeugtank.

Ferner ist in einer speziellen Verfahrensvariante vorgesehen, dass Informationen von einem Informationsträger ausgelesen werden, der von einem ein Additiv enthaltenden Additivbehälter und/oder einem den Kraftstoff enthaltenden Kraftstoffbehälter getragen wird. Die in Abhängigkeit der gemessenen Eigenschaften einzuspeisende Einspeisemenge Additiv wird in Abhängigkeit der ausgelesenen Informationen berechnet.

Gemäß einer Variante ist eine der gemessenen Eigenschaften eine elektrische Leitfähigkeit des Kraftstoffs, und als Additiv wird ein Additiv zur Anpassung der Antistatik-Eigenschaften des Kraftstoffs eingeleitet.

Eine alternative oder ergänzende Variante sieht vor, dass eine der gemessenen Eigenschaften der Gehalt an freiem Wasser im Kraftstoff ist, und als Additiv ein Additiv zur Bindung von Wasser im Kraftstoff eingeleitet wird.

Eine andere alternative oder ergänzende Variante sieht vor, dass eine der gemessenen Eigenschaften die thermische Stabilität des Kraftstoffs ist, und als Additiv ein Additiv zur Verbesserung der thermischen Stabilität des Kraftstoffs eingeleitet wird.

Eine weitere alternative oder ergänzende Variante sieht vor, dass eine der gemessenen Eigenschaften der Gefrierpunkt von im Kraftstoff enthaltenem Wasser ist, und als Additiv ein Icing Inhibitor eingeleitet wird, wobei der Icing Inhibitor insbesondere zur Verbesserung des Gefrierpunkts von im Kraftstoff enthaltenem Wasser eingeleitet wird.

Eine weitere alternative oder ergänzende Variante sieht vor, dass eine der gemessenen Eigenschaften die Schmierfähigkeit des Kraftstoffs ist, und als Additiv ein Additiv zur Verbesserung der Schmierfähigkeit des Kraftstoffs eingeleitet wird.

Eine weitere alternative oder ergänzende Variante sieht vor, dass eine der gemessenen Eigenschaften der Metallgehalt des Kraftstoffs ist, und als Additiv ein Additiv zur Desaktivierung enthaltener Metalle im Kraftstoff eingeleitet wird.

Bei einer weiteren alternativen oder ergänzenden Variante ist vorgesehen, dass wenigstens eine der an der ersten Messstelle gemessenen Eigenschaften des durch die Förderleitung strömenden Kraftstoffs auch an einer zweiten Messstelle zwischen der Einleitungsstelle und der Austrittsöffnung gemessen wird. Damit wird die Kraftstoffqualität nach der Additivierung geprüft.

Ein weiterer optionaler Verfahrensschritt betrifft ein Nachregeln der berechneten Einspeisemenge an Additiv durch eine Korrekturberechnung der berechneten Einspeisemenge, wobei die Korrekturberechnung abhängig ist von der an der zweiten Messstelle gemessenen Eigenschaft, auf einen Zielwert für die an der zweiten Messstelle gemessene Eigenschaft, wobei der Zielwert zwischen einem oberen Grenzwert und einem unteren Grenzwert liegt.

Vorzugsweise ist das Verfahren durch ein Durchmischen des Kraftstoffs und des über die Einspeisestelle eingeleiteten Additivs vor der Austrittsöffnung ergänzt, insbesondere zwischen der Einspeisestelle und der zweiten Messstelle.

Weiterhin sieht eine Verfahrensoption ein Messen der Durchflussmenge des durch die Förderleitung geleiteten Kraftstoffs zwischen dem ersten Ende und der Einspeisestelle vor, wobei ein Berechnen der in Abhängigkeit der gemessenen Eigenschaften einzuspeisenden Einspeisemenge an Additiv in Abhängigkeit der gemessenen Durchflussmenge erfolgt.

In bestimmten Verfahrenssituation bietet sich als optionaler Schritt an, das Abstimmen des Einleitens der einzuspeisenden Einspeisemenge Additiv durch Regeln der Durchflussmenge des durch die Förderleitung geleiteten Kraftstoffs durchzuführen.

Eine besonders genaue Dosierung des Additivs gelingt durch Messen der Einspeisemenge des über die Einspeisestelle tatsächlich in die Förderleitung eingeleiteten Additivs und Regeln der Einspeisemenge des Additivs basierend auf der tatsächlich gemessenen Einspeisemenge.

Als zusätzlicher Verfahrensschritt kann ein Protokollieren von Daten aus der Gruppe der folgenden Informationen und Messdaten durchgeführt werden: Informationen der Informationsträger, Durchflussmenge von Kraftstoff durch die Förderleitung, Einspeisemenge des oder der Additive, Eigenschaft des durch die Förderleitung strömenden Kraftstoffs vor der Einspeisestelle, Eigenschaft des durch die Förderleitung strömenden Kraftstoffs hinter der Einspeisestelle, Ort, Datum, Dauer des Einleitens eines Additivs, Umgebungstemperatur, Kraftstofftemperatur, Operateur, Auftragnehmer, Förderdruck der Fördereinrichtung, und Förderdruck der Dosierfördereinrichtungen.

Optional kann basierend auf den protokollierten Informationen und Messdaten ein automatisiertes Einleiten einer Nachbestellung von Kraftstoff, oder ein automatisiertes Einleiten einer Nachbestellung von Additiv, oder eine automatisierte Logistplanerstellung für die Versorgung mit Additiv, oder ein automatisiertes Erstellen einer Rechnungsposition für die Ausstellung einer Kundenrechnung durchgeführt werden.

Optional lässt sich das Verfahren mit einer Kraftstoffadditivierungsvorrichtung durchführen wie sie vorstehend und nachstehend beschrieben ist.

Die Erfindung betrifft außerdem die Verwendung einer Kraftstoffadditivierungsvorrichtung wie sie vorstehend und nachstehend beschrieben ist zur Durchführung des Verfahrens wie es vorstehend und nachstehend beschrieben ist.

Besonders bevorzugt erfolgt die Verwendung bei und/oder zur Betankung eines Flugzeugs, insbesondere eines Flugzeugtanks als Zielbehälter hinter der Austrittsöffnung. Dabei kann der Kraftstoffbehälter insbesondere ein Tankwagen oder einer Pipeline sein. Hierdurch kann die

Vermischung des Kraftstoffs, insbesondere Turbinenkraftstoffs (Jet Fuel,) mit mindestens einem Additiv unmittelbar vor Zuführung in den Zielbehälter, insbesondere den Kraftstofftank, erfolgen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigt:

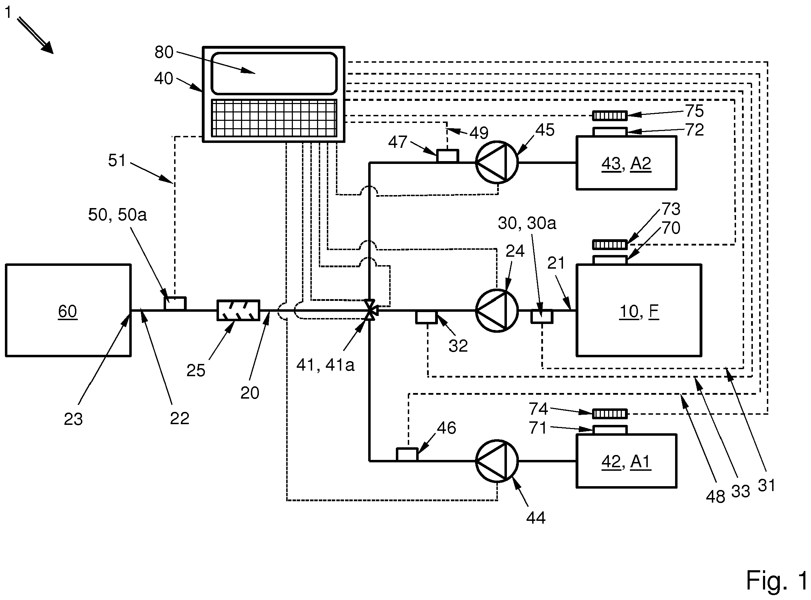

- Fig. 1: eine Kraftstoffadditivierungsvorrichtung.

In Fig. 1 erkennt man eine Kraftstoffadditivierungsvorrichtung 1. Diese verfügt über einen Kraftstoffbehälter 10, an den eine Förderleitung 20 mit einem ersten Ende 21 angeschlossen ist. Der Kraftstoffbehälter 10 kann beispielsweise ein Kraftstoffdepot, ein Zwischentanklager, eine Pipeline oder ein Tankwagen jeweils eines Flughafens sein. Mit der Förderleitung 20 ist Kraftstoff F aus dem Kraftstoffbehälter 10 zu einer Austrittsöffnung 23 am zweiten Ende 22 der Förderleitung 20 leitbar. Das zweite Ende 22 mündet in einen Zielbehälter 60. Als Zielbehälter 60 kommen beispielsweise ein Tankwagen, Tank, Vorratstank, Zwischentank, eine Pipeline, ein Fahrzeugtank eines Kraftfahrzeugs oder Luftfahrzeugs, insbesondere eines Flugzeugs oder Helikopters in Betracht. Bei dem Kraftstoff F handelt es sich in bevorzugten Anwendungsbereichen um einen flüssigen Turbinenkraftstoff (Jet Fuel).

Weiterhin ist eine Dosiereinrichtung 40 vorgesehen. Diese weist eine Datenverbindung zu einer in oder an der Förderleitung 20 angeordneten ersten Sensorik 30 auf. Diese hat eine Datenverbindung 31 zu einer Steuereinheit 80 der Dosiereinrichtung 40. Mit der ersten Sensorik 30 und der Steuereinheit 80 der Dosiereinrichtung 40 lässt sich eine Eigenschaft des durch die Förderleitung 20 strömenden Kraftstoffs F messen.

Die Dosiereinrichtung 40 hat weiterhin eine Dosierschnittstelle 41, die zwischen der ersten Sensorik 30 und der Austrittsöffnung 23 mit der Förderleitung 20 verbunden ist, und weist wenigstens zwei, hier insbesondere exakt zwei Additivbehälter 42, 43 mit je einem flüssigen Additiv A1, A2 auf. Des Weiteren ist die Dosiereinrichtung 40 dazu ausgestaltet, aus den Additivbehältern 42, 43 in Abhängigkeit der mit der ersten Sensorik 30 gemessenen Eigenschaften eine Einspeisemenge an Additiv A1, A2 zu berechnen und die berechnete Einspeisemenge Additiv A1, A2 über die Dosierschnittstelle 41 in die Förderleitung 20 zu leiten. Hierfür sind der Dosiereinrichtung 40, insbesondere der Steuereinheit 80 Zielwerte für die Eigenschaften vorgegeben, die durch Zugabe von Additiv A1, A2 erreicht werden sollen.

In der Förderleitung 20 sitzt außerdem eine Fördereinrichtung 24, insbesondere eine Förderpumpe. Platziert ist diese hier insbesondere zwischen der ersten Sensorik 30, die eine erste Messstelle 30a, ausbildet, und der Austrittsöffnung 23, und im Besonderen zwischen der ersten Sensorik 24 und der Dosierschnittstelle 41, die eine Einspeisestelle 41a definiert.

Sowohl die erste Sensorik 30 als auch die Dosierschnittstelle 41 können sich jeweils optional über die Länge eines Leitungsabschnitts der Förderleitung 20 ziehen und beispielsweise mehrere hintereinander liegende Sensoren oder Einspeiseöffnungen in der Förderleitung 20 aufweisen.

Zwischen der Dosiereinrichtung 40 und der Austrittsöffnung 23 ist eine Mischeinrichtung 25 in der Förderleitung 20 angeordnet, die ein Labyrinth aus in den Strömungskanal der Förderleitung 20 ragenden Strömungskörpern aufweist. In diesem Bereich ist der Leitungsquerschnitt der Förderleitung 20 aufgeweitet, damit der Strömungswiderstand in der Mischeinrichtung 25 gering bleibt.

Weiterhin erkennt man zwischen dem Kraftstoffbehälter 10 und der Dosiereinrichtung 40 einen Durchflussmengensensor 32, der eine Datenverbindung 33 zu der Dosiereinrichtung 40 bzw. deren Steuereinheit 80 aufweist. Mit dem Durchflussmengensensor 32 und der Dosiereinrichtung 40 wird die Durchflussmenge von Kraftstoff F durch die Förderleitung 20 bestimmt. Basierend auf der tatsächlich bestimmten Durchflussmenge wird die über die Dosierschnittstelle 41 in die Förderleitung 20 zu leitende Einspeisemenge der Additive A1, A2 in Abhängigkeit von der bestimmten Durchflussmenge von Kraftstoff F berechnet. Hierfür ist die Dosiereinrichtung 40 unter anderem auch dazu ausgestaltet, den Durchfluss des Kraftstoffs F in der Förderleitung 20 zu regeln, insbesondere, wenn Additiv A1, A2 nicht oder nicht schnell genug in die Förderleitung 20 leitbar ist. Im Besonderen wird der Durchfluss des Kraftstoffs F in der Förderleitung 20 und der Durchfluss des über die Einspeisestelle 41 eingespeisten Additivs A1, A2 in einem geschlossenen Intervall zwischen minimalen und maximalen Durchflüssen zueinander geregelt.

Dabei ist auch zwischen den Additivbehältern 42, 43 und der Dosierschnittstelle 41 jeweils ein Dosiermengensensor 46, 47 angeordnet, der eine Datenverbindung 48, 49 zu der Dosiereinrichtung 40 bzw. deren Steuereinheit 80 aufweist. Hiermit wird die tatsächliche Einspeisemenge von Additiv A1, A2 bestimmt und entsprechend der berechneten Einspeisemenge geregelt. Vorliegend wird auch der Volumenstrom der Additive A1, A2 aktiv mit Hilfe von Dosierfördereinrichtungen 44, 45 bewirkt, insbesondere mittels Dosierpumpen, die jeweils zwischen den Additivbehältern 42, 43 und der Dosierschnittstelle 41 sitzen.

Ferner erkennt man, dass zwischen der Dosiereinrichtung 40 bzw. der Dosierschnittstelle 41 und der Austrittsöffnung 23 eine zweite Sensorik 50 eine zweite Messstelle 50a ausbildet, die in und/oder an der Förderleitung 20 angeordnet ist. Insbesondere sitzt die zweite Sensorik 50 zwischen der Mischeinrichtung 25 und der Austrittsöffnung 23. Die zweite Sensorik 50 hat eine Datenverbindung 51 zu der Dosiereinrichtung 40 bzw. deren Steuereinheit 80. Mit der zweiten Sensorik 50 und der Dosiereinrichtung 40 bzw. deren Steuereinheit 80 werden die Eigenschaften des durch die Förderleitung 20 strömenden Kraftstoffs F gemessen, die auch mit der ersten Sensorik 30 gemessen und durch Zugabe der Additive A1, A2 geändert werden.

Es bestehen mit dieser Dosiereinrichtung 40 unter anderem die Optionen:
- dass der oder einer der Additivbehälter 42, 43 ein Additiv A1, A2 zur Anpassung der Antistatik-Eigenschaften des Kraftstoffs F enthält und mit der ersten Sensorik 30 die elektrische Leitfähigkeit des Kraftstoffs F bestimmt wird, wobei basierend auf der elektrischen Leitfähigkeit des Kraftstoffs die Einspeisemenge des Additivs A1, A2 zur Anpassung der Antistatik-Eigenschaften des Kraftstoffs F berechnet wird;
- dass der oder einer der Additivbehälter 42, 43 ein Additiv A1, A2 zur Bindung von Wasser im Kraftstoff F enthält und mit der ersten Sensorik 30 der Gehalt an freiem Wasser im Kraftstoff F bestimmt wird, wobei basierend auf dem Gehalt an freiem Wasser im Kraftstoff F die Einspeisemenge des Additivs A1, A2 zur Bindung von Wasser im Kraftstoff F berechnet wird;
- dass der oder einer der Additivbehälter 42, 43 ein Additiv A1, A2 zur Verbesserung der thermischen Stabilität des Kraftstoffs F enthält und mit der ersten Sensorik 30 die thermische Stabilität des Kraftstoffs F bestimmt wird, wobei basierend auf der thermischen Stabilität des Kraftstoffs die Einspeisemenge des Additivs A1, A2 zur Verbesserung der thermischen Stabilität des Kraftstoffs F berechnet wird;
- dass der oder einer der Additivbehälter 42, 43 ein Additiv A1, A2 zur Desaktivierung des Metallgehalts enthält und mit der ersten Sensorik 30 der Metallgehalt des Kraftstoffs F bestimmt wird, wobei basierend auf dem Metallgehalt des Kraftstoffs F die Einspeisemenge des Additivs A1, A2 zur Desaktivierung des Metallgehalts berechnet wird;
- dass der oder einer der Additivbehälter 42, 43 als Additiv A1, A2 ein Additiv zur Verbesserung der Schmierfähigkeit enthält und mit der ersten Sensorik 30 die Schmierfähigkeit des Kraftstoffs F bestimmt wird, wobei basierend auf der Schmierfähigkeit des Kraftstoffs F die Einspeisemenge des Additivs zur Verbesserung der Schmierfähigkeit berechnet wird;
- dass der oder einer der Additivbehälter 42, 43 als Additiv A1, A2 Icing Inhibitoren enthält und mit der ersten Sensorik 30 der Gehalt an Icing Inhibitoren im Kraftstoff F bestimmt wird, wobei basierend auf dem Gehalt an Icing Inhibitoren im Kraftstoff F die Einspeisemenge an Icing Inhibitoren berechnet wird.

Die Additivbehälter 42, 43 können unter anderem aus der Gruppe Tankwagen, Intermediate Bulk Container (IBC), Fass oder Tank stammen. Vorzugsweise sind die Additivbehälter 42, 43 jeweils über individuelle Koppelmittel mit der Dosierschnittstelle 41 verbunden, sodass es nicht zu Verwechslungen kommen kann.

Solche individuellen Koppelmittel, beispielsweise spezielle Flansche oder Kupplungen, verhindern ein Vertauschen von Additivbehältern mit unterschiedlichen Additiven. Vorliegend weisen die die Additivbehälter 42, 43 und der Kraftstoffbehälter 10 jeweils einen Informationsträger 70, 71, 72 auf, dessen Informationen über jeweils einen Detektor 73, 74, 75 an die Dosiereinrichtung 40 übermittelt werden. Der Informationsträger 70 des Kraftstoffbehälters 10 trägt Informationen über den Kraftstofftyp und physikalische Kenndaten betreffend die Zieleigenschaft sowie optional eine Chargennummer des im Kraftstoffbehälter 10 enthaltenen Kraftstoffs F. Die Informationsträger 71, 72 der Additivbehälter 42, 43 enthalten jeweils Informationen über den Additivtyp und optional eine Chargennummer des im Additivbehälter 42, 43 enthaltenen Additivs A1, A2. Die Informationsträgern 70, 71, 72 entstammen jeweils aus der Gruppe bestehend aus eindimensionalen Barcodes, zweidimensionalen Barcodes und RFID- (radio-frequency identification) Transpondern.

Auf diese Weise lässt sich mit der Dosiereinrichtung 40, insbesondere der Steuereinheit 80, eine Entnahme des Inhalts aus den Additivbehältern 42, 43 unterbinden, wenn die ausgelesenen Informationen nicht zu in der Dosiereinrichtung 40 hinterlegten Daten passen. Hierzu kann beispielsweise ein Entnahmeventil oder ein Mehrwegeventil in der Dosierschnittstelle 41 geschlossen werden. Außerdem lassen sich die Dosierfördereinrichtungen 44, 45 stoppen.

Die Dosiereinrichtung 40 bzw. deren Steuereinheit 80 können auch eine Informationsverarbeitungseinheit aufweisen, mit der Informationen und Messdaten aus der Gruppe Informationen der Informationsträger 70, 71, 72, Durchflussmenge von Kraftstoff F durch die Förderleitung 20, Einspeisemenge des oder der Additive A1, A2, Eigenschaft des durch die Förderleitung 20 strömenden Kraftstoffs F vor der Dosierschnittstelle 41, Eigenschaft des durch die Förderleitung 20 strömenden Kraftstoffs F hinter der Dosierschnittstelle 41, Ort, Datum, Dauer des Einleitens eines Additivs, Umgebungstemperatur, Kraftstofftemperatur, Operateur, Auftragnehmer, Förderdruck der Fördereinrichtung und Förderdruck der Dosierfördereinrichtungen protokolliert werden können.

Die Erfindung ist nicht auf eine der vorbeschriebenen Ausführungsformen beschränkt, sondern in vielfältiger Weise abwandelbar.

Insbesondere kann die Kraftstoffadditivierungsvorrichtung 1 entsprechend der vorstehend und nachstehend beschriebenen alternativen Ausgestaltungsformen ausgestaltet sein oder solche als optional beschriebenen Merkmale sind entbehrlich.

Des Weiteren kann mit der Kraftstoffadditivierungsvorrichtung 1 das vorstehend und nachstehend beschriebene Verfahren ausgeführt werden. Dabei kann die Kraftstoffadditivierungsvorrichtung 1 jeweils zur Ausführung der Verfahrensoption ausgestaltet sein. Umgekehrt kann das Verfahren von den vorstehend und nachstehend beschriebenen Ausgestaltungen der Kraftstoffadditivierungsvorrichtung 1 Gebrauch machen.

## Patentansprüche

1. **Kraftstoffadditivierungsvorrichtung (1)** mit einem Kraftstoffbehälter (10) und einer mit ihrem ersten Ende (21) an den Kraftstoffbehälter (10) angeschlossenen Förderleitung (20), über die Kraftstoff (F) aus dem Kraftstoffbehälter (10) zu einer Austrittsöffnung (23) am zweiten Ende (22) der Förderleitung (20) leitbar ist,
- wobei in oder an der Förderleitung (20) eine erste Sensorik (30) angeordnet ist, die eine Datenverbindung (31) zu einer Dosiereinrichtung (40) aufweist,
- wobei die Dosiereinrichtung (40) über eine Dosierschnittstelle (41) zwischen der ersten Sensorik (30) und der Austrittsöffnung (23) mit der Förderleitung (20) verbunden ist, und
- wobei die Dosiereinrichtung (40) wenigstens einen Additivbehälter (42, 43) aufweist,
**dadurch gekennzeichnet, dass**
- mit der ersten Sensorik (30) und der Dosiereinrichtung (40) eine Eigenschaft des durch die Förderleitung (20) strömenden Kraftstoffs (F) messbar ist,
- und die Dosiereinrichtung (40) dazu ausgestaltet ist, aus dem oder den Additivbehältern (42, 43) in Abhängigkeit der gemessenen Eigenschaften eine berechnete Einspeisemenge Additiv (A1, A2) über die Dosierschnittstelle (41) in die Förderleitung (20) zu leiten.

2. Kraftstoffadditivierungsvorrichtung (1) nach Anspruch 1, **dadurch gekennzeichnet, dass** der Kraftstoffbehälter (10) ein Kraftstoffdepot, ein Zwischentanklager, eine Pipeline oder einen Tankwagen jeweils eines Flughafens ist.

3. Kraftstoffadditivierungsvorrichtung (1) nach einem der Ansprüche 1 oder 2, **dadurch gekennzeichnet, dass** der oder die Additivbehälter (42, 43) jeweils über individuelle Koppelmittel mit der Dosierschnittstelle (41) verbunden sind.

4. Kraftstoffadditivierungsvorrichtung (1) nach einem der vorhergehenden Ansprüche, **dadurch gekennzeichnet, dass** der oder die Additivbehälter (42, 43) und/oder der Kraftstoffbehälter (10) jeweils einen Informationsträger (70, 71, 72) aufweist, dessen Informationen über jeweils einen Detektor (73, 74, 75) an die Dosiereinrichtung (40) übermittelbar sind.

5. Kraftstoffadditivierungsvorrichtung (1) nach einem der vorhergehenden Ansprüche, **dadurch gekennzeichnet, dass** zwischen der Dosiereinrichtung (40) und der Austrittsöffnung (23) eine zweite Sensorik (50) in oder an der Förderleitung (20) angeordnet ist, die eine Datenverbindung (51) zu der Dosiereinrichtung (40) aufweist, wobei mit der zweiten Sensorik (50) und der Dosiereinrichtung (40) eine Eigenschaft des durch die Förderleitung (20) strömenden Kraftstoffs (F) messbar ist, die auch mit der ersten Sensorik (30) messbar ist.

6. Kraftstoffadditivierungsvorrichtung (1) nach einem der vorhergehenden Ansprüche, **dadurch gekennzeichnet, dass** zwischen der Dosiereinrichtung (40) und der Austrittsöffnung (23) eine Mischeinrichtung (25) in der Förderleitung (20) angeordnet ist.

7. **Verfahren** zur Additivierung eines Kraftstoffs (F) umfassend die folgenden Schritte:
- Leiten eines Kraftstoffs (F) von einem Kraftstoffbehälter (10) über eine mit einem ersten Ende (21) angeschlossene Förderleitung (20) zu einer Austrittsöffnung (23) an einem zweiten Ende (22) der Förderleitung (20);
und **gekennzeichnet durch** folgende Schritte:
- Messen von wenigstens einer Eigenschaft des durch die Förderleitung (20) strömenden Kraftstoffs (F) an einer ersten Messstelle (30a);
- Berechnen einer in Abhängigkeit der gemessenen Eigenschaften berechneten Einspeisemenge Additiv (A1, A2);
- Einleiten der berechneten Einspeisemenge Additiv (A1, A2) in die Förderleitung (20) über eine Einspeisestelle (41a) zwischen der ersten Messstelle (30a) und der Austrittsöffnung (23).

8. Verfahren nach Anspruch 7, **gekennzeichnet durch** die folgenden Schritte:
- Auslesen von Informationen von einem Informationsträger (70, 71, 72), der von einem ein Additiv (A1, A2) enthaltenden Additivbehälter (42, 43) und/oder einem den Kraftstoff (F) enthaltenden Kraftstoffbehälter (10) getragen wird;
- Berechnen der in Abhängigkeit der gemessenen Eigenschaften einzuspeisenden Einspeisemenge Additiv (A1, A2) in Abhängigkeit der ausgelesenen Informationen.

9. Verfahren nach einem der Ansprüche 7 oder 8, **dadurch gekennzeichnet, dass** dieses wenigstens einen der Schritte gemäß der folgenden Gruppe aufweist:
- eine der gemessenen Eigenschaften ist eine elektrische Leitfähigkeit des Kraftstoffs (F), und als Additiv (A1, A2) wird ein Additiv (A1, A2) zur Anpassung der Antistatik-Eigenschaften des Kraftstoffs (F) eingeleitet;
- eine der gemessenen Eigenschaften ist der Gehalt an freiem Wasser im Kraftstoff (F), und als Additiv (A1, A2) wird ein Additiv (A1, A2) zur Bindung von Wasser im Kraftstoff (F) eingeleitet;
- eine der gemessenen Eigenschaften ist die thermische Stabilität des Kraftstoffs (F), und als Additiv (A1, A2) wird ein Additiv (A1, A2) zur Verbesserung der thermischen Stabilität des Kraftstoffs (F) eingeleitet;
- eine der gemessenen Eigenschaften ist der Gefrierpunkt von im Kraftstoff (F) enthaltenem Wasser, und als Additiv (A1, A2) wird ein Icing Inhibitor (A1, A2) zur Verbesserung des Gefrierpunkts von im Kraftstoff (F) enthaltenem Wasser eingeleitet;
- eine der gemessenen Eigenschaften ist die Schmierfähigkeit des Kraftstoffs (F), und als Additiv (A1, A2) wird ein Additiv (A1, A2) zur Verbesserung der Schmierfähigkeit des Kraftstoffs (F) eingeleitet; und
- eine der gemessenen Eigenschaften ist der Metallgehalt des Kraftstoffs (F), und als Additiv (A1, A2) wird ein Additiv (A1, A2) zur Desaktivierung enthaltener Metalle im Kraftstoff (F) eingeleitet.

10. Verfahren nach einem der Ansprüche 7 bis 9, **gekennzeichnet durch** die folgenden Schritte:
- Messen wenigstens einer der an der ersten Messstelle (30a) gemessenen Eigenschaften des durch die Förderleitung (20) strömenden Kraftstoffs (F) an einer zweiten Messstelle (50a) zwischen der Einleitungsstelle (41a) und der Austrittsöffnung (23), und
- Nachregeln der berechneten Einspeisemenge an Additiv (A1, A2) durch eine Korrekturberechnung der berechneten Einspeisemenge, wobei die Korrekturberechnung abhängig ist von der an der zweiten Messstelle (50a) gemessenen Eigenschaft, auf einen Zielwert für die an der zweiten Messstelle (50a) gemessene Eigenschaft, wobei der Zielwert zwischen einem oberen Grenzwert und einem unteren Grenzwert liegt.

11. Verfahren nach einem der Ansprüche 7 bis 10, **gekennzeichnet durch** die folgenden Schritte:
- Durchmischen des Kraftstoffs (F) und des über die Einspeisestelle (41a) eingeleiteten Additivs (A1, A2) vor der Austrittsöffnung (23).

12. Verfahren nach einem der Ansprüche 7 bis 11, **gekennzeichnet durch** die folgenden Schritte:
- Messen der Durchflussmenge des durch die Förderleitung (20) geleiteten Kraftstoffs (F) zwischen dem ersten Ende (21) und der Einspeisestelle (41a);
- Berechnen der in Abhängigkeit der gemessenen Eigenschaften einzuspeisenden Einspeisemenge Additiv (A1, A2) in Abhängigkeit der gemessenen Durchflussmenge.

13. Verfahren nach einem der Ansprüche 7 bis 12, **gekennzeichnet durch** die folgenden Schritte:
- Messen der Einspeisemenge des über die Einspeisestelle (41a) tatsächlich in die Förderleitung (20) eingeleiteten Additivs (A1, A2);
- Regeln der Einspeisemenge des Additivs (A1, A2) basierend auf der tatsächlich gemessenen Einspeisemenge.

14. Verfahren nach einem der Ansprüche 7 bis 13, **gekennzeichnet durch** den folgenden Schritt:
- Protokollieren von Daten aus der Gruppe der folgenden Informationen und Messdaten:
- Informationen der Informationsträger (70, 71, 72);
- Durchflussmenge von Kraftstoff (F) durch die Förderleitung (20);
- Einspeisemenge des oder der Additive (A1, A2);
- Eigenschaft des durch die Förderleitung (20) strömenden Kraftstoffs (F) vor der Einspeisestelle (41a);
- Eigenschaft des durch die Förderleitung (20) strömenden Kraftstoffs (F) hinter der Einspeisestelle (41a);
- Ort;
- Datum;
- Dauer des Einleitens eines Additivs;
- Umgebungstemperatur;
- Kraftstofftemperatur;
- Operateur;
- Auftragnehmer;
- Förderdruck der Fördereinrichtung; und
- Förderdruck der Dosierfördereinrichtungen.

15. Verfahren nach Anspruch 14, **gekennzeichnet durch** die folgenden Schritte basierend auf den protokollierten Informationen und Messdaten:
- Automatisiertes Einleiten einer Nachbestellung von Kraftstoff (F); oder
- Automatisiertes Einleiten einer Nachbestellung von Additiv (A1, A2); oder
- Automatisierte Logistplanerstellung für die Versorgung mit Additiv (A1, A2); oder
- Automatisiertes Erstellen einer Rechnungsposition für die Ausstellung einer Kundenrechnung.

16. **Verwendung** einer Kraftstoffadditivierungsvorrichtung (1) nach einem der Ansprüche 1 bis 6 zur Durchführung des Verfahrens nach einem der Ansprüche 7 bis 15bei der Betankung eines Flugzeugs.

## Claims

1. **Fuel additivation device (1)** having a fuel container (10) and a delivery line (20) which is connected at its first end (21) to the fuel container (10) and via which the fuel (F) can be conducted from the fuel container (10) to an outlet opening (23) at the second end (22) of the delivery line (20),
- wherein a first sensor system (30), which has a data connection (31) to a metering apparatus (40), is arranged in or on the delivery line (20)
- wherein the metering apparatus (40) is connected to the delivery line (20) via a metering interface (41) between the first sensor system (30) and the outlet opening (23),
- wherein the metering apparatus (40) has at least one additive container (42, 43),
**characterised in that**
- a property of the fuel (F) flowing through the delivery line (20) can be measured with the first sensor system (30) and the metering apparatus (40),
- and the metering apparatus (40) is configured to conduct a calculated feed quantity of additive (A1, A2) into the delivery line (20) from the additive container(s) (42, 43) via the metering interface (41) as a function of the measured properties.

2. Fuel additivation device (1) according to claim 1, **characterised in that** the fuel container (10) is a fuel depot, an intermediate tank farm, a pipeline or a tanker of an airport, respectively.

3. Fuel additivation device (1) according to any of claims 1 or 2, **characterised in that** the additive container(s) (42, 43) are each connected to the metering interface (41) via individual coupling means.

4. Fuel additivation device (1) according to any of the preceding claims, **characterised in that** the additive container(s) (42, 43) and/or the fuel container (10) each have an information carrier (70, 71, 72) whose information can be transmitted to the metering apparatus (40) via a detector (73, 74, 75) in each case.

5. Fuel additivation device (1) according to any of the preceding claims, **characterised in that** a second sensor system (50) is arranged in or on the delivery line (20) between the metering apparatus (40) and the outlet opening (23) and has a data connection (51) to the metering apparatus (40), wherein a property of the fuel (F) flowing through the delivery line (20), which property can also be measured with the first sensor system (30), can be measured with the second sensor system (50) and the metering apparatus (40).

6. Fuel additivation device (1) according to any of the preceding claims, **characterised in that** a mixing device (25) is arranged in the delivery line (20) between the metering apparatus (40) and the outlet opening (23).

7. **Method** for additivation of a fuel (F), comprising the following steps:
- conducting a fuel (F) from a fuel container (10) via a delivery line (20) connected at a first end (21) to an outlet opening (23) at a second end (22) of the delivery line (20);
and **characterised by** the following steps:
- measuring at least one property of the fuel (F) flowing through the delivery line (20) at a first measuring point (30a);
- calculating a feed quantity of additive (A1, A2) calculated as a function of the measured properties;
- introducing the calculated feed quantity of additive (A1, A2) into the delivery line (20) via a feed point (41a) between the first measuring point (30a) and the outlet opening (23).

8. Method according to claim 7, **characterised by** the following steps:
- reading information from an information carrier (70, 71, 72) carried by an additive container (42, 43) containing an additive (A1, A2) and/or by a fuel container (10) containing the fuel (F);
- calculating, as a function of the read information, the feed quantity of additive (A1, A2) which is to be fed in as a function of the measured properties.

9. Method according to any of claims 7 or 8, **characterised in that** it has at least one of the steps from the following group:
- one of the measured properties is an electrical conductivity of the fuel (F), and an additive (A1, A2) for adjusting the antistatic properties of the fuel (F) is introduced as additive (A1, A2);
- one of the measured properties is the free water content in the fuel (F), and an additive (A1, A2) for binding water in the fuel (F) is introduced as additive (A1, A2);
- one of the measured properties is the thermal stability of the fuel (F), and an additive (A1, A2) for improving the thermal stability of the fuel (F) is introduced as additive (A1, A2);
- one of the measured properties is the freezing point of water contained in the fuel (F), and an icing inhibitor (A1, A2) for improving the freezing point of water contained in the fuel (F) is introduced as additive (A1, A2);
- one of the measured properties is the lubricity of the fuel (F), and an additive (A1, A2) for improving the lubricity of the fuel (F) is introduced as additive (A1, A2);
- one of the measured properties is the metal content of the fuel (F), and an additive (A1, A2) for deactivating metals contained in the fuel (F) is introduced as additive (A1, A2).

10. Method according to any of claims 7 to 9, **characterised by** the following steps:
- measuring at least one of the properties, which is measured at the first measuring point (30a), of the fuel (F) flowing through the delivery line (20) at a second measuring point (50a) between the inlet point (41a) and the outlet opening (23), and
- readjusting the calculated feed quantity of additive (A1, A2), by means of a correction calculation of the calculated feed quantity, the correction calculation being dependent on the property measured at the second measuring point (50a), to a target value for the property measured at the second measuring point (50a), the target value being between an upper limit value and a lower limit value.

11. Method according to any of claims 7 to 10, **characterised by** the following steps:
- mixing the fuel (F) and the additive (A1, A2) introduced via the feed point (41a) upstream of the outlet opening (23).

12. Method according to any of claims 7 to 11, **characterised by** the following steps:
- measuring the flow rate of the fuel (F) conducted through the delivery line (20) between the first end (21) and the feed point (41a);
- calculating, as a function of the measured flow rate, the feed quantity of additive (A1, A2) to be fed in as a function of the measured properties.

13. Method according to any of claims 7 to 12, **characterised by** the following steps:
- measuring the feed quantity of the additive (A1, A2) actually introduced into the delivery line (20) via the feed point (41a);
- controlling the feed quantity of the additive (A1, A2) based on the actually measured feed quantity.

14. Method according to any of claims 7 to 13, **characterised by** the following step:
- logging data from the group of the following information and measurement data:
- information from the information carriers (70, 71, 72);
- flow rate of fuel (F) through the delivery line (20);
- feed quantity of the additive(s) (A1, A2);
- property of the fuel (F) flowing through the delivery line (20) upstream of the feed point (41a);
- property of the fuel (F) flowing through the delivery line (20) downstream of the feed point (41a);
- location;
- date;
- duration of the introduction of an additive;
- ambient temperature;
- fuel temperature;
- operator;
- contractor;
- delivery pressure of the delivery apparatus; and
- delivery pressure of the metering delivery apparatuses.

15. Method according to claim 14, **characterised by** the following steps based on the logged information and measurement data:
- automated initiation of a reorder of fuel (F); or
- automated initiation of a reorder of additive (A1, A2); or
- automated logistical plan generation for the supply of additive (A1, A2); or
- automated generation of an invoice item for issuing a customer invoice.

16. **Use** of a fuel additivation device (1) according to any of claims 1 to 6 for carrying out the method according to any of claims 7 to 15 in the refuelling of an aircraft.

## Revendications

1. **Dispositif d'additivation de carburant (1)** avec un réservoir de carburant (10) et un conduit d'acheminement (20) connectée avec sa première extrémité (21) au réservoir de carburant (10), via laquelle du carburant (F) peut être conduit du réservoir de carburant (10) à un orifice de sortie (23) au niveau de la seconde extrémité (22) du conduit d'acheminement (20),
- dans lequel un premier système de détection (30) est agencé dans ou sur le conduit d'acheminement (20), qui présente une liaison de données (31) à un dispositif de dosage (40),
- dans lequel le dispositif de dosage (40) est relié au conduit d'acheminement (20) via une interface de dosage (41) entre le premier système de détection (30) et l'orifice de sortie (23), et
- dans lequel le dispositif de dosage (40) présente au moins un réservoir d'additif (42, 43),
**caractérisé en ce que**
- une propriété du carburant (F) s'écoulant à travers le conduit d'acheminement (20) peut être mesurée à l'aide du premier système de détection (30) et du dispositif de dosage (40),
- et le dispositif de dosage (40) est adapté pour conduire depuis le ou les réservoirs d'additif (42, 43), en fonction des propriétés mesurées, une quantité d'alimentation calculée d'additif (A1, A2) jusque dans le conduit d'acheminement (20) via l'interface de dosage (41).

2. Dispositif d'additivation de carburant (1) selon la revendication 1, **caractérisé en ce que** le réservoir de carburant (10) est un dépôt de carburant, un parc de stockage intermédiaire, une canalisation ou un camion-citerne d'un aéroport respectif.

3. Dispositif d'additivation de carburant (1) selon la revendication 1 ou 2, **caractérisé en ce que** le ou les réservoirs d'additif (42, 43) sont connectés respectivement à l'interface de dosage (41) via des moyens de couplage individuels.

4. Dispositif d'additivation de carburant (1) selon l'une quelconque des revendications précédentes, **caractérisé en ce que** le ou les réservoirs d'additif (42, 43) et/ou le réservoir de carburant (10) présente(nt) respectivement un support d'informations (70, 71, 72), dont des informations peuvent être transmises au dispositif de dosage (40) via un détecteur (73, 74, 75) respectif.

5. Dispositif d'additivation de carburant (1) selon l'une quelconque des revendications précédentes, **caractérisé en ce qu'un** second système de détection (50) est agencé dans ou sur le conduit d'acheminement (20) entre le dispositif de dosage (40) et l'orifice de sortie (23), qui présente une liaison de données (51) au dispositif de dosage (40), dans lequel à l'aide du second système de détection (50) et du dispositif de dosage (40), une propriété du carburant (F) s'écoulant à travers le conduit d'acheminement (20) peut être mesurée, qui peut également être mesurée à l'aide du premier système de détection (30).

6. Dispositif d'additivation de carburant (1) selon l'une quelconque des revendications précédentes, **caractérisé en ce qu'un** dispositif de mélange (25) est agencé dans le conduit d'acheminement (20) entre le dispositif de dosage (40) et l'orifice de sortie (23).

7. **Procédé** pour additiver un carburant (F), comprenant les étapes suivantes consistant à
- conduire un carburant (F) depuis un réservoir de carburant (10), via un conduit d'acheminement (20) relié avec une première extrémité (21) à un orifice de sortie (23) au niveau d'une seconde extrémité (22) du conduit d'acheminement (20) ;
et **caractérisé par** les étapes suivantes consistant à :
- mesurer au moins une propriété du carburant (F) s'écoulant à travers le conduit d'acheminement (20) au niveau d'un premier emplacement de mesure (30a) ;
- calculer une quantité d'alimentation d'additif (A1, A2) calculée en fonction des propriétés mesurées ;
- introduire la quantité d'alimentation calculée d'additif (A1, A2) dans le conduit d'acheminement (20) via un emplacement d'introduction (41a) entre le premier emplacement de mesure (30a) et l'orifice de sortie (23).

8. Procédé selon la revendication 7, **caractérisé par** les étapes suivantes consistant à :
- lire des informations depuis un support d'informations (70, 71, 72) qui est porté par un premier réservoir d'additif (42, 43) contenant un additif (A1, A2) et/ou un réservoir de carburant (10) contenant le carburant (F) ;
- calculer, en fonction des propriétés mesurées, la quantité d'alimentation à alimenter de l'additif (A1, A2), en fonction des informations lues.

9. Procédé selon l'une des revendications 7 ou 8, **caractérisé en ce qu'il** présente au moins l'une des étapes du groupe suivant :
- une des propriétés mesurées est une conductivité électrique du carburant (F), et comme additif (A1, A2), un additif (A1, A2) est introduit pour ajuster la propriété antistatique du carburant (F) ;
- une des propriétés mesurées est la teneur d'eau libre dans le carburant (F), et comme additif (A1, A2), un additif (A1, A2) est introduit pour lier de l'eau dans le carburant (F) ;
- une des propriétés mesurées est la stabilité thermique du carburant (F), et comme additif (A1, A2), un additif (A1, A2) est introduit pour améliorer la stabilité thermique du carburant (F) ;
- une des propriétés mesurées est le point de congélation d'eau contenue dans le carburant (F), et comme additif (A1, A2), un inhibiteur de gel (A1, A2) est introduit pour améliorer le point de congélation de l'eau contenue dans le carburant (F) ;
- une des propriétés mesurées est l'onctuosité du carburant (F), et comme additif (A1, A2), un additif (A1, A2) est introduit pour améliorer l'onctuosité du carburant (F) ; et
- une des propriétés mesurées est la teneur en métal du carburant (F), et comme additif (A1, A2), un additif (A1, A2) est introduit pour désactiver des métaux contenus dans le carburant (F).

10. Procédé selon l'une des revendications 7 à 9, **caractérisé par** les étapes suivantes consistant à :
- mesurer au moins une des propriétés mesurées au niveau du premier emplacement de mesure (30a) du carburant (F) s'écoulant à travers le conduit d'acheminement (20), au niveau d'un second emplacement de mesure (50a) entre l'emplacement d'alimentation (41a) et l'orifice de sortie (23), et
- régler la quantité d'alimentation calculée d'additif (A1, A2) par un calcul de correction de la quantité d'alimentation calculée, dans lequel le calcul de correction est en fonction de la propriété mesurée au niveau du second emplacement de mesure (50a), à une valeur cible pour la propriété mesurée au niveau du second emplacement de mesure (50a), dans lequel la valeur cible se situe entre une valeur limite supérieure et une valeur limite inférieure.

11. Procédé selon l'une des revendications 7 à 10, **caractérisé par** l'étape suivante consistant à :
- mélanger le carburant (F) et l'additif (A1, A2) introduit via l'emplacement d'alimentation (41a) avant l'orifice de sortie (23).

12. Procédé selon l'une des revendications 7 à 11, **caractérisé par** les étapes suivantes consistant à :
- mesurer le débit d'écoulement du carburant (F) conduit à travers le conduit d'acheminement (20) entre la première extrémité (21) et l'emplacement d'alimentation (41a) ;
- calculer, en fonction du débit d'écoulement mesuré, la quantité d'alimentation d'additif (A1, A2) à alimenter en fonction des propriétés mesurées.

13. Procédé selon l'une des revendications 7 à 12, **caractérisé par** les étapes suivantes consistant à :
- mesurer la quantité d'alimentation de l'additif (A1, A2) introduite effectivement dans le conduit d'acheminement (20) via l'emplacement d'introduction (41a) ;
- régler la quantité d'alimentation de l'additif (A1, A2) sur la base de la quantité d'alimentation effectivement mesurée.

14. Procédé selon l'une des revendications 7 à 13, **caractérisé par** l'étape suivante consistant à :
- enregistrer des données du groupe des informations et données mesurées suivantes :
- informations du support d'informations (70, 71, 72) ;
- débit d'écoulement de carburant (F) à travers le conduit d'acheminement (20) ;
- quantité d'alimentation du ou des additif(s) (A1, A2) ;
- propriété du carburant (F) s'écoulant à travers le conduit d'acheminement (20) avant l'emplacement d'alimentation (41a) ;
- propriété du carburant (F) s'écoulant à travers le conduit d'acheminement (20) derrière l'emplacement d'alimentation (41a) ;
- lieu ;
- date ;
- durée de l'introduction d'un additif ;
- température ambiante ;
- température de carburant ;
- opérateur ;
- fournisseur ;
- pression d'alimentation du dispositif d'acheminement ; et
- pression d'alimentation des dispositifs d'acheminement de dosage.

15. Procédé selon la revendication 14, **caractérisé par** les étapes suivantes sur la base des informations et données mesurées enregistrées consistant à :
- introduire automatiquement une commande supplémentaire de carburant (F) ; ou
- introduire automatiquement une commande supplémentaire d'additif (A1, A2) ; ou
- élaborer un planificateur logique automatique pour l'approvisionnement en additif (A1, A2) ; ou
- élaborer automatiquement une position de facturation pour l'obtention d'une facture client.

16. **Utilisation** d'un dispositif d'additivation de carburant (1) selon l'une des revendications 1 à 6 pour mettre en œuvre le procédé selon l'une des revendications 7 à 15 pendant le ravitaillement d'un aéronef.
